**Europäisches Patentamt**

**European Patent Office**

**Office européen des brevets**

(19)

(11) Veröffentlichungsnummer: **0 042 160**
**B1**

(12) **EUROPÄISCHE PATENTSCHRIFT**

(45) Veröffentlichungstag der Patentschrift:
**29.10.86**

(51) Int. Cl.⁴: **F 24 J 3/00, F 24 D 11/02**

(21) Anmeldenummer: **81104555.8**

(22) Anmeldetag: **12.06.81**

(54) **Verfahren und Einrichtung zum Speichern und Hochtransformieren der Temperatur von Wärme.**

(30) Priorität: **13.06.80 DE 3022284**

(43) Veröffentlichungstag der Anmeldung:
**23.12.81 Patentblatt 81/51**

(45) Bekanntmachung des Hinweises auf die Patenterteilung:
**29.10.86 Patentblatt 86/44**

(84) Benannte Vertragsstaaten:
**AT BE CH DE FR GB IT LI NL SE**

(56) Entgegenhaltungen:
**EP - A - 0 026 257**
**DE - A - 2 801 895**
**DE - A - 2 808 464**
**DE - A - 2 810 360**
**DE - A - 2 823 563**
**FR - A - 2 441 134**
**US - A - 4 034 569**
**US - A - 4 121 432**

(73) Patentinhaber: **Alefeld, Georg, Prof. Dr.,**
**Josef-Raps-Strasse 3, D-8000 München 40 (DE)**

(72) Erfinder: **Alefeld, Georg, Prof. Dr., Josef-Raps-Strasse 3,**
**D-8000 München 40 (DE)**
Erfinder: **Maier-Laxhuber, Peter, Dipl.-Phys.,**
**Erwin-von-Steinbachweg 33, D-8000 München 45 (DE)**
Erfinder: **Rothmeyer, Markus, Gielwitzerstrasse 28,**
**D-8058 Erding (DE)**

(74) Vertreter: **von Bezold, Dieter, Dr. et al, Patentanwälte Dr.**
**D. von Bezold, Dipl.-Ing. P. Schütz, Dipl.-Ing. W. Heusler**
**Maria-Theresia-Strasse 22 Postfach 86 02 60,**
**D-8000 München 86 (DE)**

## Beschreibung

Die vorliegende Erfindung betrifft ein Verfahren zum Speichern und Hochtransformieren der Temperatur von Wärme, bei welchem

a) in einem vorgegebenen ersten Druckbereich ein Arbeitsmittel durch Wärme eines vorgegebenen Temperaturbereichs aus einem Absorptionsmittel ausgetrieben und der beim Austreiben entstehende Arbeitsmitteldampf kondensiert wird;

b) das kondensierte Arbeitsmittel gespeichert wird;

c) der Druck des gespeicherten, kondensierten Arbeitsmittels auf einen Wert in einem zweiten Druckbereich, der höher, als der vorgegebene erste Druckbereich ist, erhöht wird,

d) das gespeicherte kondensierte Arbeitsmittel bei dem höheren Druck verdampft wird und

e) das verdampfte Arbeitsmittel in einem Druckbereich, der höher liegt als der vorgegebene Druckbereich unter Erzeugung von Absorptionswärme einer über dem vorgegebenen Temperaturbereich liegenden Temperatur im Absorptionsmittel absorbiert wird.

Ferner betrifft die Erfindung Einrichtungen zur Durchführung eines solchen Verfahrens.

Für Einrichtungen, die mit Betriebs- oder Eingangswärme mit Temperaturen in einem mittleren Temperaturbereich gespeist werden und einerseits Nutz- oder Ausgangswärme auf einem höheren Temperaturniveau sowie Abwärme auf einem niedrigeren Temperaturniveau liefern, hat sich der Begriff «Wärmetransformator» eingebürgert. Dieser Begriff soll auch hier in dem angegebenen Sinne verwendet werden.

Ein kontinuierlich betriebener Wärmetransformator wurde schon von K. Nesselmann in der Veröffentlichung «Zur Theorie der Wärmetransformation», Wissenschaftliche Veröffentlichung Siemens-Konzern 12 (1933), Heft 2, S. 89–109 diskutiert. Kontinuierlich arbeitende Wärmetransformatoren sind ferner aus DE-B-1 020 997 sowie DE-A-2 554 937, 2 629 441, 2 635 557 und 2 727 990 bekannt.

Der Wärmetransformator gemäss DE-A-2 554 937 soll dazu dienen, die Abwärme eines Kraftwerkes auf ein höheres Temperaturniveau zu heben. Als Arbeitsmittel wird $NH_3$ verwendet.

Der aus DE-A-2 635 557 bekannte Wärmetransformator arbeitet mit dem Arbeitsstoffsystem $NH_3$/$H_2O$/Propan.

Auch zeitlich diskontinuierlich («periodisch») arbeitende Wärmetransformatoren sind bekannt, z.B. aus DE-A-2 629 441, 2 758 727 und 2 808 464.

Der aus DE-A-2 629 441 bekannte Wärmetransformator soll zur Krafterzeugung dienen, wobei grosse Mengen Ammoniak gespeichert werden müssen. In DE-A-2 758 727 wird ein als mehrstufiger Speicher betriebener Wärmetransformator angegeben, ohne dass jedoch nähere Angaben gemacht werden, wie der Betrieb erfolgen soll. Als Speichermedium dient $Na_2S$, das gefährlich ist und keine Temperaturen über 80 °C zulässt. Der Wärmetransformator, der in DE-A-2 808 464 beschrieben ist, enthält eine spezielle Kombination zweier zeitlich diskontinuierlich betriebener Speicher und dient zur Speicherung und Hochtransformierung von Sonnenwärme von 35 °C auf ca. 70 °C. Als Arbeitsmittel soll Methylamin verwendet werden, was nicht nur giftig ist, sondern sich auch leicht zersetzt. Als Speicher- oder Absorptionsmittel sind $CaCl_2$ und $LiCl$ vorgesehen. Die angegebenen Einrichtungen sind sehr kompliziert und benötigen viele Wärmeaustauscher, was den Wirkungsgrad beeinträchtigt.

Ferner könnten Metallhydride als Arbeitsstoffsystem verwendet werden. Das Arbeitsstoffsystem Metall/Wasserstoff lässt sich jedoch nur bei einem Wärmetransformator verwenden, der nach dem Resorberprinzip arbeitet, was mit einem erheblichen technischen Aufwand verbunden ist. Bei Verwendung von Wasserstoffgas besteht ausserdem immer eine gewisse Explosionsgefahr und die Schwellung der Hydride bei der Wasserstoffaufnahme bringt technisch nur schwer zu lösende Probleme mit sich.

Wärmetransformatoren werden für viele Zwecke benötigt: Wärmeversorgung und Krafterzeugung sind oft miteinander gekoppelt z.B. bei Heizkraftwerken, bei Diesel- und Gasmotoren, die Generatoren oder Kompressorwärmepumpen antreiben und deren Abwärme genutzt wird, bei der Prozesswärmeversorgung, z.B. in der chemischen und Nahrungsmittelindustrie. Wegen des zeitlich sehr unterschiedlich strukturierten Wärme- und Kraftbedarfes benötigt man einerseits effektive Wärmespeicher. Andererseits muss häufig das Temperaturniveau der zur Verfügung stehenden Wärme erhöht werden, um diese Wärme nutzen zu können. Zum Beispiel werden Heizkraftwerke im allgemeinen hinsichtlich der Elektrizitätserzeugung mit optimalem Wirkungsgrad betrieben, was bedeutet, dass die Abwärme auf einem möglichst niedrigen Temperaturniveau anfallen soll. Bei der Fernwärmeversorgung muss dagegen die Vorlauftemperatur des Wärmeträgers einen gewissen, mit zunehmendem Fernwärmebedarf ansteigenden Mindestwert haben. Diese Forderung lässt sich bei direkter Einspeisung der Abwärme des Kraftwerkes in das Fernwärmenetz nur auf Kosten des Wirkungsgrades des Kaftwerkes erfüllen. Ein Speicher, der während Bedarfsspitzen des Fernwärmenetzes Wärme auf einem Niveau liefert, das höher ist als das Beladungsniveau (Beladung z.B. nachts mit 100 °C und Wärmeabgabe zu Spitzenlastzeiten mit 130 °C bis 150 °C) ergäbe also eine erhebliche Verbesserung des Gesamtwirkungsgrades des Wärmekraftwerkes und der Fernwärmeversorgung. Bei Gas- und Dieselmotor-Heizkraftwerken fällt im Kühlkreislauf der Antriebsmaschine Wärme bei 80 °C bis 100 °C an. Auch dieses Temperaturniveau ist für ein Fernwärmenetz oder für Prozesswärme zu niedrig, da hier oft Vorlauftemperaturen zwischen 120 und 150 °C benötigt werden. Auch hier wird ein Speicher benötigt, der nicht nur einen Ausgleich für schwankende Nachfrage liefert, sondern zusätzlich die Wärme auf einem höheren Temperaturniveau abzugeben vermag als sie eingespeichert worden ist.

Bei kommunalen Fernwärmenetzen zur Deckung des privaten Wärmebedarfs sowie bei der industriellen Fernwärmeversorgung muss, wie erwähnt, in Spitzenlastzeiten die Vorlauftemperatur angehoben werden, um den Wärmebedarf voll decken zu können. Eine höhere Vorlauftemperatur führt jedoch nicht nur zu einem schlechteren Wirkungsgrad bei der Krafterzeugung, sondern auch zu höheren Verlusten im Fernwärmeleitungsnetz. Hier könnte ein beim Verbraucher aufgestellter Wärmespeicher Abhilfe schaffen, der in Zeiten niedrigen Wärmebedarfs aufgeladen wird und in Hochlastzeiten Ausgangswärme mit einer Temperatur liefert, die höher als die der zum Beladen verwendeten Eingangswärme ist. Hierdurch würde sich nicht nur die Anhebung der Vorlauftemperatur des Fernwärmenetzes ganz oder zumindest teilweise erübrigen, sondern auch die Investitionskosten im Fernwärmenetz verringern, da dieses gleichmässiger belastet wird. Solche Speicher könnten an Netzknotenpunkten oder direkt bei den einzelnen Verbrauchern stehen und mit Wärme entweder aus dem Vorlaufstrang und/oder aus dem Rücklaufstrang beladen werden.

In der Industrie fällt häufig Abwärme an, die nicht mehr genutzt werden kann, da sie eine zu niedrige Temperatur hat und/oder im Zeitpunkt des Entstehens und/oder am Ort des Entstehens nicht benötigt wird. Auch hier lassen sich diskontinuierliche Wärmetransformatoren mit Vorteil zum Speicher, Hochtransformieren des Temperaturniveaus und gegebenenfalls Transport von Wärme verwenden.

In all den genannten Fällen, insbesondere für Speicher-Wärmetransformatoren, die in der Nähe von Verbrauchern, z.B. in Wohnhäusern, Werkhallen und Büros stehen, ist es unerlässlich, dass das verwendete Arbeitsstoffsystem aus umweltfreundlichen und ungefährlichen Substanzen besteht. Diese Substanzen müssen gleichzeitig so beschaffen sein, dass Ausgangs- oder Nutzwärme auf höherem Temperaturniveau, z.B. 100 bis 150°C oder sogar 200 bis 250°C erzeugt werden kann.

Der vorliegenden Erfindung liegt also die Aufgabe zugrunde, einen Speicher-Wärmetransformator anzugeben, der im Gegensatz zum Stand der Technik mit umweltfreundlichen und ungefährlichen Stoffen arbeitet und ausserdem im Gegensatz zum Stand der Technik, auch höhere Ausgangs- oder Nutzwärmetemperaturen als 100°C, insbesondere Ausgangstemperaturen über 150°C bis 250°C oder sogar 300°C zu liefern vermag.

Die Erfindung löst diese Aufgabe bei dem eingangs genannten Verfahren dadurch, dass
– als Absorptionsmittel ein Zeolith und als Arbeitsmittel Wasser verwendet werden,
– das Austreiben in einem Temperaturbereich durchgeführt wird, der über 80°C, vorzugsweise über 100°C liegt und
– das Verdampfen des kondensierten Arbeitsmittels in einem Temperaturbereich über 80°C durchgeführt wird.

Weiterbildungen des erfindungsgemässen Verfahrens und vorteilhafte Einrichtungen zur Durchführung des Verfahrens gemäss der Erfindung sind in den abhängigen Ansprüchen gekennzeichnet.

Bei den Verfahren und Einrichtungen gemäss der Erfindung wird also das Arbeitsstoffsystem Zeolith/$H_2O$ verwendet. Dieses Arbeitsstoffsystem ist umweltfreundlich und ungiftig, so dass keine kostspieligen Sicherheitsvorkehrungen erforderlich sind und eine Verwendung auch in öffentlich zugänglichen Bereichen möglich ist. Ausserdem hat gerade dieses erfindungsgemäss in einem Wärmetransformator verwendete Arbeitsstoffsystem den Vorteil, dass die gewünschte Nutzwärme Temperaturen von mindestens 130°C, insbesondere über 150°C bis 250°C und gegebenenfalls sogar bis 300°C und darüber mit gutem Wirkungsgrad erreichbar sind.

Zeolith/$H_2O$ als Arbeitsstoffsystem ist bisher nur bei einer mit Niedertemperaturwärme, wie Sonnenwärme, betriebenen Kühlanlage (US-A-4 034 569) und bei einer Klein-Klimaanlage (US-A-4 121 432), die mit Verdampfer- bzw. Kondensatortemperaturen von ca. 4°C bzw. 43°C arbeitet. Die dort angegebenen Verfahren und die angegebenen Temperatur- und Druckbereiche lassen aber nicht erkennen, dass das Arbeitsstoffsystem Zeolith/$H_2O$ in einem Wärmetransformator zur Speicherung von Wärme und zur Erzeugung von Nutzwärme mit einem Temperaturniveau bis zu 300°C und darüber eingesetzt werden kann.

Im folgenden werden Ausführungsbeispiele der Erfindung unter Bezugnahme auf die Zeichnung näher erläutert.
Es zeigen:
Fig. 1 einen einstufigen Wärmetransformator mit verschiedenen Vorrichtungen zur Verbesserung des Wirkungsgrades, der nach dem Verfahren gemäss der Erfindung arbeitet;
Fig. 2 eine Vorrichtung zur Entnahme von Wärme aus einem Speicher des Wärmetransformators gemäss Fig. 1;
Fig. 3 eine Einrichtung, die einen zeitlich diskontinuierlich arbeitenden Wärmetransformator in Kombination mit einer Kompressorwärmepumpe enthält;
Fig. 4, 5 und 6 Ausführungsformen von nach dem erfindungsgemässen Verfahren arbeitenden Einrichtungen, die einen kontinuierlich arbeitenden Wärmetransformator in Kombination mit einem diskontinuierlich arbeitenden Wärmetransformator enthalten, und
Fig. 7 eine nach dem erfindungsgemässen Verfahren arbeitende Einrichtung, die zwei diskontinuierlich arbeitende Wärmetransformatoren enthält.

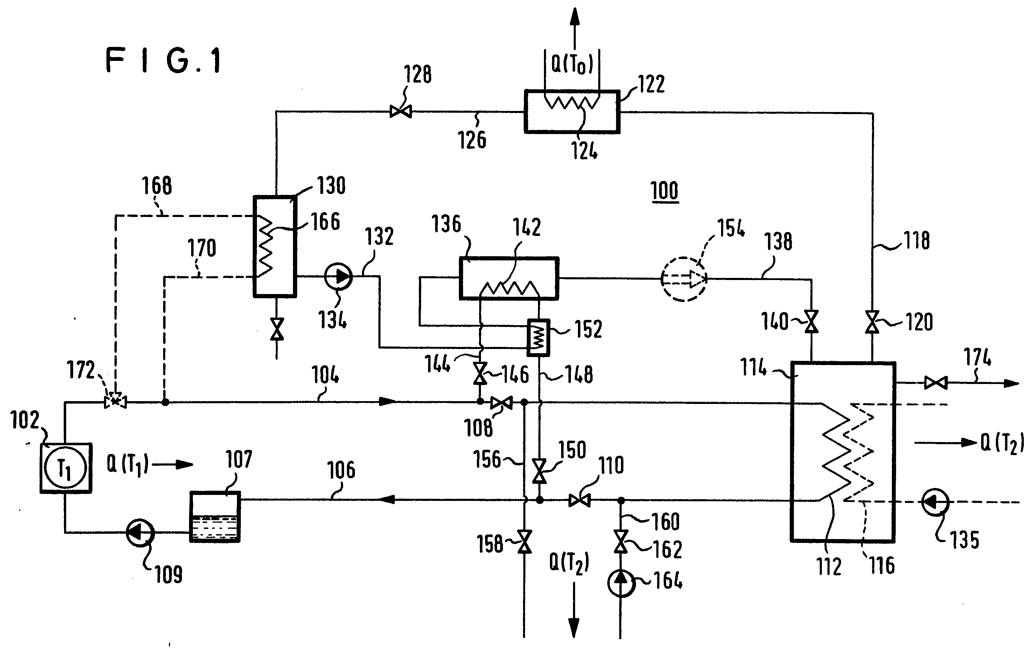

Fig. 1 zeigt schematisch einen einstufigen Wärmetransformator 100, dem Eingangswärme von einer Wärmequelle 102 zugeführt wird. Die Eingangswärme kann im Abdampf von einer Dampfturbinenanlage, in einem durch die Abwärme eines Gasturbinenprozesses aufgeheizten Fluid oder im Wärmeträger einer Vorlauf- oder Rücklaufleitung einer Fernheizungsanlage, einem durch die Abwärme eines Motors oder eines industriellen Prozesses erwärmten Wärmeträger oder einem durch konzentrierte Sonnenwärme (Sonnenofen) aufgeheizten Wärmeträger enthalten sein. Die Eingangswärme von der Wärmequelle 102 wird einem Wärmespeicher 114 über einen Wärmeträgerkreislauf zugeführt, der ein im Wärmespeicher 114 enthaltenes Wärmetauscherelement 112 enthält, das der Einfachheit halber als Wärmetauscherschlange dargestellt ist, jedoch in der Praxis z.B. eine Rippen- oder Lamellenwärmeaustauscheranordnung oder dgl. sein kann. Dies gilt auch für die anderen in den Zeichnungen als Wärmetauscherschlangen dargestellten und bezeichneten Wärmetauscherelemente.

Im Wärmeträgerkreislauf befinden sich ferner zwei Absperrventile 108, 110 sowie bei Verwendung eines angänglich dampfförmigen und in der Wärmetauscherschlange 112 kondensierten Wärmeträgers, wie Dampf, ein Vorratsgefäss 107, sowie eine Speisepumpe 109, die den Wärmeträger wieder zur Wärmequelle 102 zurückfördert.

Der Wärmespeicher 114 enthält einen Zeolith als Sorptionsmittel und $H_2O$ als Arbeitsmittel. Die Temperatur des Wärmeträgers in der Wärmetauscherschlange 112 kann in der Grössenordnung von 100 °C, beispielsweise zwischen 80 und 110 °C liegen. Der Wärmespeicher 114 kann ferner eine Wärmetauscherschlange 116 enthalten, durch die ein Wärmeträger zur Entnahme der Ausgangs- oder Nutzwärme geleitet wird. Die Wärmetauscherschlange 116 kann beispielsweise Wärme an ein Fernwärmeversorgungsnetz liefern.

An den Wärmespeicher 114 ist eine Arbeitsmittel-Ausgangsleitung 118 angeschlossen, die ein Ventil 120 enthält und zu einem Kondensator 122 führt, der auf relativ niedriger Temperatur arbeitet und einen Wärmetauscher 124 enthält, über den die bei der Kondensation entstehende Abwärme an einen Kühlturm, einen Fluss oder dgl. abgeführt wird. Das kondensierte Arbeitsmittel, also Wasser, fliesst dann über eine Leitung 126, die ein Ventil 128 enthält, in ein Vorratsgefäss 130. Das Vorratsgefäss 130 ist über eine Leitung 132, die eine Pumpe 134 enthält, mit dem Eingang eines Verdampfers 136 verbunden, dessen Ausgang über eine Arbeitsmitteleingangsleitung 138, die ein Absperr- oder Rückschlagventil 140 enthält, mit einem Arbeitsmitteleingang des Wärmespeichers 114 verbunden ist.

Der Verdampfer 136 enthält eine Heizschlange 142, die eine Eingangsleitung 144 mit einem Ventil 146 sowie eine Ausgangsleitung 148 mit einem Ventil 150 enthält. Die Eingangsleitung 144 und die Ausgangsleitung 148 sind mit den zwischen der Wärmequelle 102 und den Ventilen 108 bzw. 110 liegenden Teilen der Leitungen 104 bzw. 106 verbunden.

Zur Erhöhung des Wirkungsgrades kann die Leitung 132 durch einen in die Ausgangsleitung 148 geschalteten Wärmetauscher 152 führen.

Die Arbeitsmitteleingangsleitung 138 kann einen Kompressor 154 enthalten.

Die zwischen der Wärmetauscherschlange 112 und den Ventilen 108 bzw. 110 gelegenen Stücke der Leitungen 104 und 106 können mit einer Leitung 156, die ein Ventil 158 enthält bzw. einer Leitung 160, die ein Ventil 162 sowie eine Umwälzpumpe 164 enthält, verbunden sein. Hierdurch kann die Nutzwärme auch über die Wärmetauscherschlange 112 entnommen werden. Selbstverständlich muss in diesem Falle der durch die Wärmequelle 102 führende Wärmeträgerkreislauf und der die Leitungen 156, 160 enthaltende Wärmeträgerkreislauf zur Entnahme der Nutzwärme das gleiche Wärmeträgermedium enthalten.

Die Ventilstellungen, Pumpenbetriebszustände, Temperaturen und Drücke für den Betrieb der in Fig. 1 dargestellten Einrichtung bei Beladung und Entladung des Wärmespeichers 114 sind in Tabelle 1 angegeben.

Beim Beladen des Speichers wird Wärme auf einem Temperaturniveau $T_1$ (z.B. 60 bis 130 °C) aus der Wärmequelle 102 mittels eines Wärmeträgerfluids, das z.B. flüssiges $H_2O$ sein kann, über die Wärmetauscherschlange 112 in den Wärmespeicher 114 eingespeist. Der Wärmespeicher enthält im ganz oder teilweise entladenen Zustand einen mit Wasser beladenen Zeolith als Speichermedium. Durch die Wärmezufuhr wird Wasserdampf aus dem Zeolith ausgetrieben, der über die Leitung 118 in den Kondensator 122 strömt, dort kondensiert und im Vorratsgefäss 130 gesammelt wird. Der Wärmetauscher 124 kann in einen eigenen Kreislauf geschaltet sein, der eine mit Flusswasser oder Umgebungsluft arbeitende Kühlvorrichtung enthält und z.B. mit $NH_3$ oder einem Fluor-Kohlenstoff, wie $CCl_2F_2$ oder $CHClF_2$ oder dgl. als Wärmeträger arbeitet. Beim Entladen des Wärmespeichers 114, also bei der Erzeugung von Ausgangs- oder Nutzwärme, wird mittels der Pumpe 134 Wasser in den Verdampfer 136 gefördert und dort durch Wärme aus der Wärmequelle 102 verdampft. Der Wasserdampf, der mit einem der Temperatur der Wärmequelle 102 entsprechenden relativ hohen Druck entsteht, wird im Zeolith im Wärmespeicher 114 absorbiert. Die dabei entstehende Absorptionswärme wird über die Wärmetauscherschlange 112 mittels des durch die Pumpe 164 geförderten Wärmeträgerfluids zum Verbraucher geleitet. Falls der Nutzwärmeträgerkreislauf mit einem Wärmeträgerfluid arbeitet, das mit dem Wärmeträgerfluid von der Wärmequelle 102 nicht mischbar ist, wird die Nutzwärme über den Wärmetauscher 116 entnommen.

Der Druck des Arbeitsmittels, der im Vorratsgefäss 130 einen der Kondensatortemperatur $T_0$ entsprechenden Wert $p_0$ (z.B. 0,01 bar) hat, wird durch die Pumpe 134 auf einen Wert $p_1$ (z.B. 1 bar), der der Temperatur $T_1$ der Wärmequelle 102 entspricht, im Verdampfer 136 erhöht. Dadurch erfolgt die Absorption des Arbeitsmitteldampfes im Zeolith bei entsprechend hohem Druck und dementsprechend wird die Absorptionswärme bei der erwünschten hohen Temperatur frei.

Es ist vorteilhaft, das durch die Pumpe 134 aus dem Sammelgefäss 130 geförderte Arbeitsmittel vor dem Eintritt in den Verdampfer 136 zu erwärmen. Dies geschieht zweckmässigerweise durch den Wärmetauscher 152, der in die Rücklaufleitung 148 des Wärmeträgermediums von der Wärmequelle 102 geschaltet ist. Durch die Vorwärmung des in den Verdampfer 136 eingespeisten Arbeitsmittels wird eine höhere mittlere Temperatur und damit ein höherer Dampfdruck im Verdampfer 136 erreicht, was wiederum eine Erhöhung des Temperaturniveaus der Nutzwärme im Speicher 114 und auch der Begasungsbreite und damit des Wirkungsgrades für den Zeolith im Speicher 114 ergibt.

Bei der Entnahme der Nutzwärme aus dem Speicher 114 strömt der Wärmeträger in den Wärmetauscherschlangen 112 bzw. 116 vorteilhafterweise in entgegengesetzter Richtung wie der Wärmeträger in der Wärmetauscherschlange 112 beim Beladen des Speichers.

Eine weitere vorteilhafte Weiterbildung der Einrichtung gemäss Fig. 1 besteht darin, im Vorratsbehälter 130 eine Wärmetauscherschlange 166 vorzusehen, die über Leitungen 168, 170 und ein Dreiwegeventil 172 an die Leitung 104 angeschlossen ist und dazu dient, das Wasser im Vorratsbehälter 130 mittels eines Teilstromes des Wärmeträgers aus der Vorlaufleitung 104 von der Wärmequelle 102 soweit aufzuwärmen, dass die Temperatur im Vorratsgefäss 130 etwas höher ist als in der Wärmetauscherschlange 142. Da das Ventil 128 beim Entladen des Speichers, also bei der Erzeugung von Nutzwärme, geschlossen ist, genügt dann der sich im Vorratsgefäss 130 aufbauende Druck, um das Wasser ohne Mithilfe der Pumpe 134 in den Verdampfer 136 zu fördern, so dass anstelle der Pumpe 134 dann ein Regelventil verwendet werden kann. Auch der Wärmetauscher 152 kann dann entfallen. Falls die Wärmequelle 102 Dampf als Wärmeträgermedium liefert, wird man in der Wärmetauscherschlange 166 vorteilhafterweise nur die Überhitzungswärme des Dampfes benutzen, so dass dann der Wärmetauscherschlange 142 nahezu gesättigter Dampf oder Nassdampf zugeführt wird. Das Dreiwegeventil 172 sperrt die Leitung 168 beim Beladungsvorgang ab, (gewünschtenfalls kann auch die Leitung 170 ein Absperrventil (nicht dargestellt) enthalten), während es beim Entladungsvorgang so eingestellt wird, dass ein gewünschter Teil des Wärmeträgerstroms aus der Wärmequelle 102 durch die Wärmetauscherschlange 166 fliesst.

Aus Sicherheitsgründen kann es manchmal zweckmässig sein, die Wärmetauscherschlange 112 nur mit Dampf zu beschicken. Wenn also die Wärmequelle 102 Abdampf eines Dampfkraftwerks als Wärmeträger liefert, so arbeiten die Wärmetauscherschlangen 112 bzw. 142 als Kondensatoren. Um eine Mischung des Kraftwerkkreislaufs mit dem Fernwärmekreislauf zu verhindern, wird in diesem Falle die Nutzwärme (evtl. ebenfalls als Dampf) dann besser über die Wärmetauscherschlange 116 entnommen. Wenn die Abgase einer Gasturbine oder eines Motors als Wärmeträger von der Wärmequelle verwendet wird, tritt in den Wärmetauscherschlangen 112 und 142 eine Abkühlung dieser Abgase ein. Alternativ können solche Abgase auch dazu verwendet werden, in einem Abhitzekessel Dampf zu erzeugen, der dann als Wärmeträger für die Eingangswärme dient. In diesem Falle kann der Verdampfer 136 dann in den Abhitzekessel integriert werden, d.h. der so erzeugte Dampf kann beim Entladevorgang direkt über das Ventil 140 in den Speicher 114 eingeleitet werden.

Für die anfängliche Entlüftung des Systems kann der Speicher 114 über eine mit einem Absperrventil versehene Leitung 174 mit einer nicht dargestellten Vakuumpumpe verbunden sein.

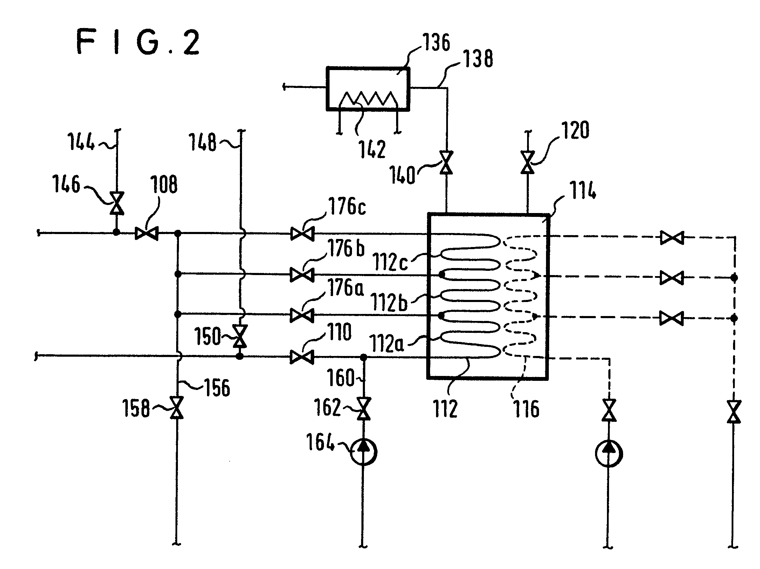

Für eine möglichst vollständige Ausnutzung der Speicherkapazität und insbesondere für die Vergleichmässigung der Temperatur der aus dem Speicher entnommenen Ausgangs- oder Nutzwärme ist es vorteilhaft, die Wärmetauscherschlange 112 bzw. 116 mit mehreren Ausgängen zu versehen, wie es beispielsweise in Fig. 2 dargestellt ist. Die Wärmetauscherschlange 112 ist hier in drei Abschnitte 112a, 112b und 112c unterteilt, die durch Leitungen mit Ventilen 176a, 176b bzw. 176c in den Wärmeträgerkreislauf einschaltbar sind. Die Wärmetauscherschlange 116 kann entsprechend aufgeteilt und angeschlossen sein.

Bei der Entnahme von Wärme absorbieren die durch die angeschlossenen Abschnitte 112a, 112b bzw. 112c gekühlten Segmente des Speichers den aus dem Verdampfer 136 angebotenen Arbeitsmitteldampf bevorzugt. Zuerst wird das Ventil 176 geöffnet, die Ventile 176b und 176c bleiben geschlossen. Der Wasserdampf wird dann bevorzugt in dem den Abschnitt 112a enthaltenden und durch diesen gekühlten Segment des Speichers 114 absorbiert. Sobald die Temperatur des Wärmeträgers im Abschnitt 112 unter einen vorgegebenen Mindestwert sinkt, wird das Ventil 176a geschlossen und das Ventil 176b geöffnet. Das den Abschnitt 112a enthaltende Segment des Speichers wird dann noch weiter entladen, gleichzeitig wird jedoch aus dem den Abschnitt 112b enthaltenden Segment des Speichers so viel Wärme zusätzlich entnommen, wie zur Erreichung der gewünschten Ausgangs- oder Vorlauftemperatur erforderlich ist. Anschliessend wird dann das Ventil 176b geschlossen, das Ventil 176c geöffnet. Dieser Entladungsmodus ist auch dann vorteilhaft, wenn der Speicher z.B. aus Zeitgründen nicht voll beladen wurde. Es entstehen dann beim Austreiben des Arbeitsmittels während der Wärmespeicherung Bereiche unterschiedlichen Austreibungsgrades, der bei der Eintrittsstelle des Wärmeträgermediums von der Wärmequelle 102 am höchsten und an der Austrittsstelle am niedrigsten ist. Dadurch, dass man den Wärmeträger bei der Entladung in entgegengesetzter Richtung wie bei der Beladung strömen lässt und den Speicher segmentweise entlädt, lässt sich eine optimale Nutzung des Speichers erreichen.

Anstelle des Wärmespeichers 114 können zwei oder mehr gleichartige Wärmespeicher verwendet werden, die zur Anpassung an Lastschwankungen in der benötigten Anzahl parallel geschaltet oder zur Realisierung eines quasikontinuierlichen Betriebs des Wärmetransformators 100 zeitlich phasenverschoben als Austreiber bzw. Absorber betrieben werden können.

Häufig ist es erwünscht, die Ausgangs- oder Nutztemperatur $T_2$ des Speichers noch weiter zu erhöhen. Dies kann mit den folgenden Massnahmen erreicht werden, die jedoch auch dann Anwendung finden können, wenn die Wärmequelle 102 die Eingangswärme auf einem Niveau liefert, das zu niedrig ist, um das gewünschte Nutzwärmetemperaturniveau $T_2$ zu erreichen. Die im folgenden beschriebenen Massnahmen dienen also dazu, den Unterschied zwischen der Temperatur $T_1$ beim Beladen des Speichers und der Temperatur $T_2$ beim Entladen des Speichers zu vergrössern.

Das Temperaturniveau der Nutzwärme kann als erstes durch den Kompressor 154 erhöht werden, der dazu dient, den Druck des im Verdampfer 136 erzeugten Arbeitsmittels (z. B. Wasserdampf) und damit das Temperaturniveau der bei der Absorption entstehenden Nutzwärme zu erhöhen. Ein solcher Kompressor kann ausserdem bei gegebenem Nutzwärmetemperaturniveau auch dazu dienen, die Begasungsbreite und damit die Ausnutzung sowie den Wirkungsgrad des Speichers 114 zu erhöhen. Unter «Begasungsbreite» wird der Unterschied der Konzentration des Zeoliths an absorbiertem Arbeitsmittel, wie Wasser, im beladenen und entladenen Zustand verstanden.

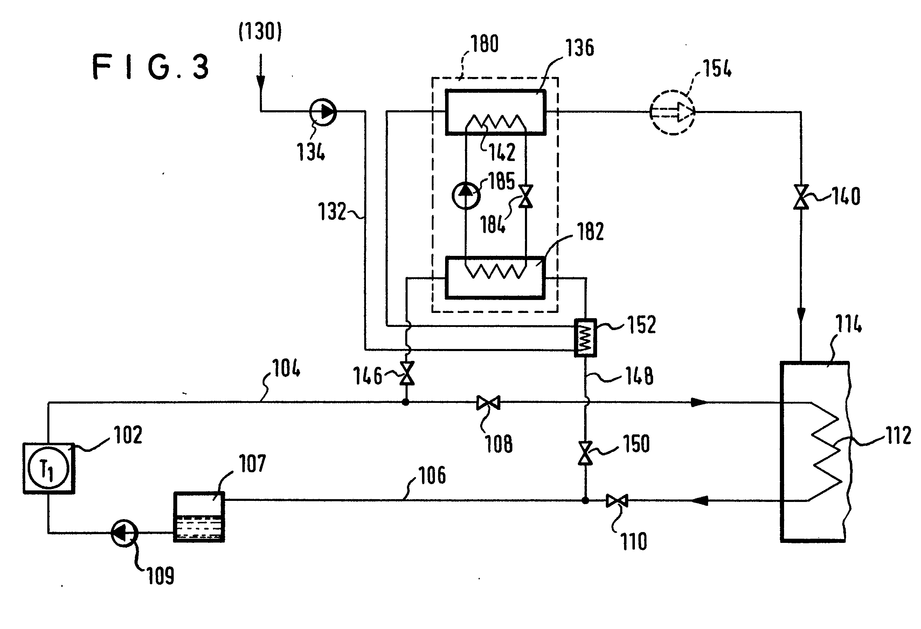

Eine weitere Massnahme zur Vergrösserung der Differenz zwischen $T_2$ und $T_1$ ist in Fig. 3 dargestellt, die einen abgewandelten Teil der Einrichtung gemäss Fig. 1 zeigt. Gleiche Teile sind mit gleichem Bezugszeichen versehen. Hier ist zwischen dem Wärmeträgerkreislauf der Wärmequelle 102 und dem Verdampfer 136 eine Kompressionswärmepumpe 180 zur Erhöhung des Druck- und Temperaturniveaus im Verdampfer 136 und der Begasungsbreite des Zeoliths im Speicher 114 eingeschaltet. Die Kompressions-Wärmepumpe 180 enthält einen Verdampfer 182, der durch das Wärmeträgermedium von der Wärmequelle 102 mit Wärme versorgt wird. Das verdampfte Arbeitsmittel der Kompressionswärmepumpe wird durch einen Kompressor 185 komprimiert und kondensiert in der Heizschlange 142 des Verdampfers 136, der also auch als Kondensator der Kompressorwärmepumpe arbeitet. Das kondensierte Arbeitsmittel wird durch ein Drosselventil 184 wieder zum Verdampfer 182 zurückgefördert.

Die Verdampfungstemperatur im Verdampfer 136 und die Austreibtemperatur im Speicher 114 können auch dadurch erhöht werden, dass man der Wärmequelle 102 eine Kompressor-Wärmepumpe nachschaltet, wobei dann die Kondensator-Wärme dieser Kompressorwärmepumpe sowohl den Verdampfer 136 als auch die Heiz- oder Wärmetauscherschlange 112 mit höherwertiger Wärme bedient (nicht dargestellt).

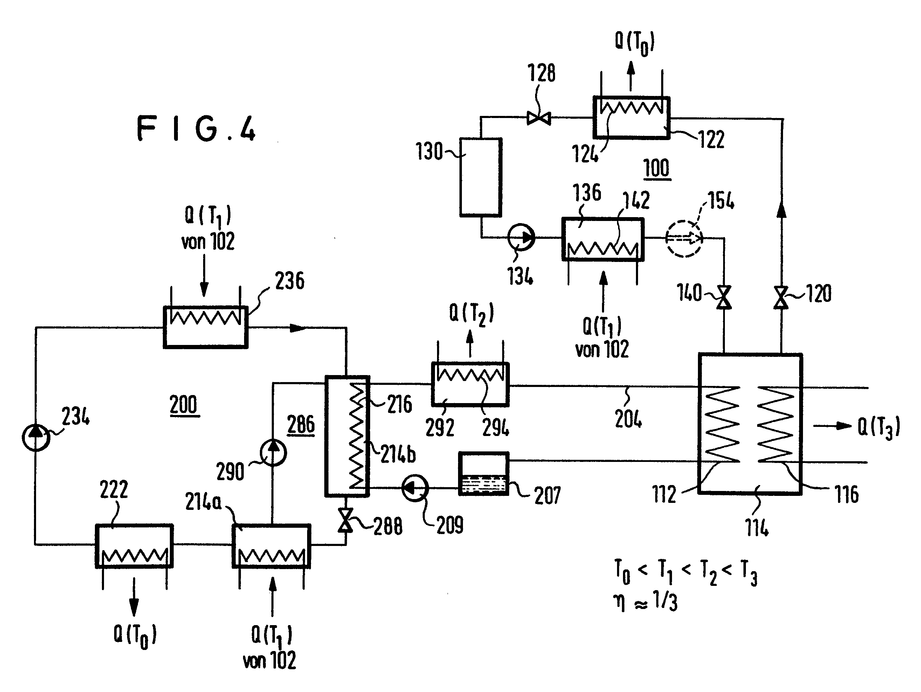

Bei der in Fig. 4 dargestellten Einrichtung wird zur Erhöhung des Nutzwärme- oder Ausgangswärmetemperaturniveaus des Wärmespeichers 114 dem diskontinuierlich arbeitenden Wärmetransformator 100 ein kontinuierlich arbeitender Wärmetransformator 200 vorgeschaltet. Dieser enthält einen Austreiber 214a, einen Kondensator 222, eine Pumpe 234, einen Verdampfer 236 und einen Absorber 214b. Ferner ist ein Absorptionsmittelkreislauf 286 vorgesehen, der eine Entspannungsvorrichtung 288 und eine Pumpe 290 enthält. Der Wärmetransformator 200 ist eine bekannte Einrichtung und nur schematisch dargestellt, z. B. fehlen die üblichen Wärmetauscher wie der zwischen armer und reicher Lösung im Absorptionsmittelkreislauf. Er kann z. B. mit dem Arbeitsmittelsystem $NH_3/H_2O$; $NH_3/H_2O/LiBr$; $NH_3/H_2O/C_4H_{10}$; $LiBr/H_2O$; $LiBr/CH_3OH$ arbeiten. Dem Absorber 214b wird die Absorptionswärme über eine Wärmetauscherschlange 216 entnommen und über einen Wärmeträgerkreislauf, der eine Leitung 204, einen in diese eingeschalteten Wärmetauscher 292 zur Entnahme von Nutzwärme, die Heizschlange 112 für den Speicher 114, ein Vorratsgefäss 207 sowie eine Pumpe 209 enthält. Im übrigen sind die Komponenten des diskontinuierlich arbeitenden Wärmetransformators mit den gleichen Bezugszeichen wie in Fig. 1 versehen.

Bei der Beladung wird Wärme Q ($T_1$) von der Wärmequelle 102 (in Fig. 4 nicht dargestellt) in den Austreiber 214a und den Verdampfer 236 eingespeist. Aus dem Kondensator 222 wird Abwärme Q ($T_0$) auf dem Temperaturniveau $T_0$ an die Umgebung abgeführt. Im Absorber 214b entsteht Nutzwärme Q ($T_2$) auf dem Temperaturniveau $T_2$. Die Wärme Q ($T_2$) wird über die Wärmetauscherschlange 216 entnommen und in den Speicher 114 über die Wärmetauscherschlange 112 eingespeist, wie es anhand von Fig. 1 erläutert worden ist. Gewünschtenfalls kann über eine Wärmetauscherschlange 294 aus dem Wärmetauscher 292 auch Nutzwärme mit dem Temperaturniveau $T_2$ entnommen werden.

Die im Kondensator 122 entstehende Abwärme und die im Kondensator 222 entstehende Abwärme können über einen gemeinsamen Kühlturm oder eine gemeinsame Flusskühlvorrichtung oder dgl. an die Umgebung abgeführt werden. Nach der Beendigung des Austreibens im Speicher 114 werden die Absorption des ausgetriebenen Arbeitsstoffes im Speicher 114 und die Entnahme der dabei entstehenden Nutzwärme durchgeführt, wie es anhand von Fig. 1 beschrieben worden ist. Die Verdampfungswärme für den Verdampfer 136 wird dabei der in Fig. 4 nicht dargestellten Wärmequelle (102 in Fig. 1) entnommen. Insgesamt ergibt sich auf diese Weise für die z. B. über die Wärmetauscherschlange 116 entnommene Nutzwärme ein Temperaturniveau $T_3$, das über $T_2$ liegt. Der theoretische Wirkungsgrad der Einrichtung als Ganzes beträgt ca. ⅓, d. h. etwa ein Drittel der gesamten Wärmemenge, die den Vorrichtungen 214a, 236 und 136 auf dem Temperaturniveau $T_1$ zugeführt wird, kann auf dem Temperaturniveau $T_3$ als Nutzwärme entnommen werden.

Typische Beispiele für die genannten Temperaturen sind:

$T_0 = 20\,°C$; $T_1 = 65\,°C$; $T_2 = 100\,°C$; $T_3 = 150\,°C$.

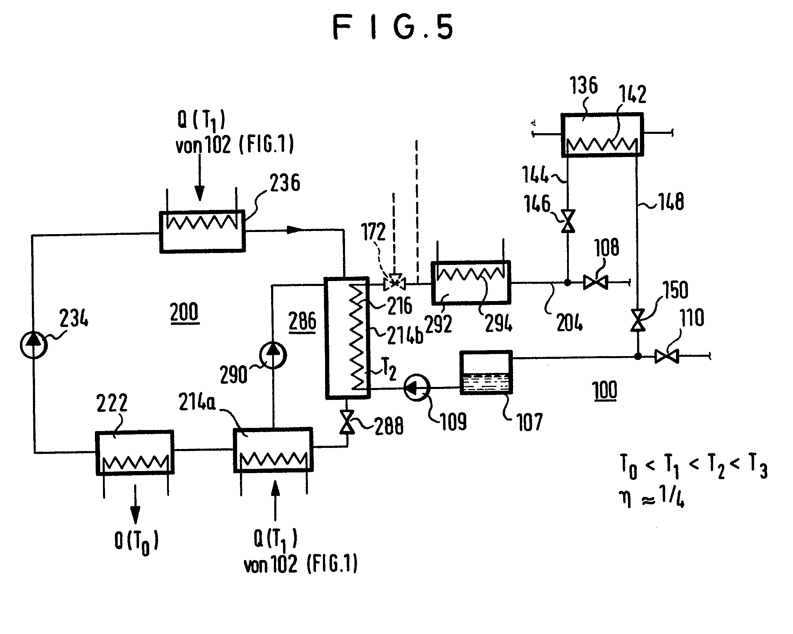

Eine weitere Anhebung des Temperaturniveaus $T_3$ der dem Speicher 114 entnehmbaren Nutzwärme kann dadurch erreicht werden, dass der Verdampfer 136 nicht mit Wärme aus Q ($T_1$) der Temperatur $T_1$ aus der Wärmequelle 102 gespeist wird, sondern mit Wärme Q ($T_2$) aus dem Absorber 214b. Die Einrichtung gemäss Fig. 4 kann zu diesem Zweck so abgewandelt werden, wie es in Fig. 5 dargestellt ist. Der Wärmetransformator 100 auf der rechten Seite der Fig. 5 ist nur zum Teil dargestellt und ist im übrigen entsprechend Fig. 1 ausgebildet. Das Wärmeträgermedium aus der Wärmetauscherschlange 216 wird also über die Leitungen 144 und 148 durch die Heizschlange 142 des Verdampfers 136 geleitet, wie es anhand von Fig. 1 erläutert wurde. Durch die Schaltung gemäss Fig. 5 wird zwar das Temperaturniveau $T_3$ der Nutwärme Q ($T_3$) die dem Speicher 114 entnehmbar ist, noch weiter erhöht, der theoretische Wirkungsgrad wird jedoch auf etwa ¼ reduziert.

Bei der Einrichtung gemäss Fig. 5 können die Wärmetauscherschlange 294 und die Wärmetauscherschlange 116 (Fig. 1) hintereinander geschaltet werden, was dann vorteilhaft ist, wenn die Nutzwärme dazu dient, ein flüssiges Wärmeträgermedium wie z.B. Wasser von einer Temperatur, die unter $T_2$ liegt, auf die Temperatur $T_3$ (Ausgangstemperatur des Wärmespeichers 114) zu erwärmen.

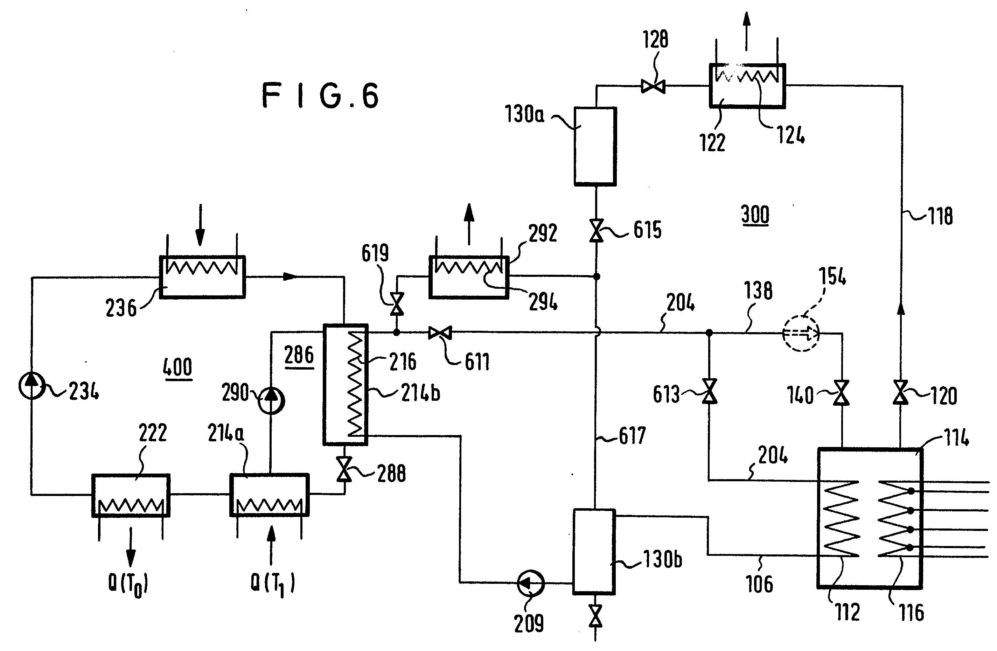

Wenn in der Wärmetauscherschlange 112 Wasserdampf als Wärmeträgermedium zur Wärmeübertragung in dem Speicher 114 verwendet wird, dann lässt sich der Verdampfer 136 (Fig. 1 und 5) der diskontinuierlich arbeitenden Wärmepumpe des Wärmetransformators 100 in den Absorber 214b (Fig. 4) der kontinuierlich arbeitenden Wärmepumpe des Wärmetransformators 200 integrieren. Eine solche vorteilhafte Einrichtung ist in Fig. 6 dargestellt, dabei sind der diskontinuierlich arbeitende Wärmetransformator, der dem Wärmetransformator 100 in Fig. 1 und 5 entspricht, mit 300 und der kontinuierlich arbeitende Wärmetransformator, mit 400 bezeichnet. Teile gleicher Funktion sind in den Fig. 1, 5 und 6 mit den gleichen Bezugszeichen bezeichnet. Die Ausgangsseite der Wärmetauscherschlange 216 ist über ein Ventil 611 mit einer Leitung 204 verbunden, die ein weiteres Ventil 613 enthält und zur Eingangsseite der Heiz- oder Wärmetauscherschlange 112 des Speichers 114 führt. Zwischen den Ventilen 611 und 613 zweigt die das Ventil 140 (und gewünschtenfalls den Kompressor 154) enthaltende Arbeitsmitteleingangsleitung 138 ab.

Die Ausgangsseite des Ventils 128 ist an ein erstes Vorratsgefäss angeschlossen, dessen Auslass über ein Ventil 615 und eine Leitung 617 mit einem zweiten Vorratsgefäss 130b verbunden ist, in das auch die Ausgangsleitung 106 der Wärmetauscherschlange 112 mündet.

Der Wärmetauscher 292 ist mit einer Eingangsseite über ein Ventil 619 mit der Ausgangsseite der Wärmetauscherschlange 216 verbunden und mit seiner Ausgangsseite an die Leitung 617 angeschlossen.

Die im Absorber 214b des kontinuierlichen Wärmetransformators 400 entstehende Wärme dient einerseits über die Wärmetauscherschlange 112 zum Austreiben des Wasserdampfes aus dem im Speicher 114 enthaltenen Zeolith und ausserdem zur Erzeugung von Wasserdampf zur Absorption und Erzeugung von Nutzwärme im Speicher 114. Die Ventilstellungen und Temperaturen der verschiedenen Einheiten der Einrichtung gemäss Fig. 6 sind in Tabelle 2 aufgeführt. Der Wärmetauscher 292 ermöglicht die Entnahme von Nutzwärme auf dem Temperaturniveau des Absorbers 214b.

Es gibt zwei Betriebsvarianten für die Einrichtung gemäss Fig. 6, die sich durch verschieden hohe Leistungsziffern und verschieden hohe Temperaturen der dem Speicher 114 entnehmbaren Nutzwärme unterscheiden. Man kann den Ausgangsdruck so wählen, dass die Abwärme im Kondensator 122 auf einem so hohen Temperaturniveau anfällt, dass diese Wärme noch für die Einspeisung in den Verdampfer 236 und/oder den Austreiber 214a geeignet ist, hierbei ergibt sich eine theoretische Leistungsziffer von ⅓. In der Beladephase des Speichers 114 wird also in den Verdampfer 236 und/oder in den Austreiber 214a sowohl Wärme aus dem Kondensator 122 auf dem Temperaturniveau $T_1'$ als auch Wärme aus der Wärmequelle 102 auf dem Temperaturniveau $T_1$ eingespeist. In der Entladephase fällt im Kondensator 122 keine Wärme an, so dass der Verdampfer 236 und der Austreiber 214a hierbei nur Wärme aus der Wärmequelle 102 beziehen können. Dies gilt nicht, wenn der Speicher 114 mehrere, zeitlich phasenverschoben arbeitende Teile enthält, die einen quasi-kontinuierlichen Betrieb gestatten.

Wählt man andererseits die Betriebsdaten des Speichers 114 so, dass die Abwärme im Kondensator 122 auf Umgebungstemperaturniveau abfällt, also auf dem gleichen Niveau wie im Kondensator 222, so ergibt sich eine theoretische Leistungsziffer von ¼ bei gleichzeitig höherem Nutzwärmeniveau $T_4$ im Speicher 114 bzw. der Wärmetauscherschlange 116.

Dem Wärmetauscher 292 kann über die Wärmetauscherschlange 294 Nutzwärme auf dem Temperaturniveau des Absorbers 214b entnommen werden; man kann die Wärmetauscherschlange 294 auch der Wärmetauscherschlange 116 vorschalten.

Das Ventil 615 ist erforderlich, da sich das Vorratsgefäss 130b während des Austreibens auf höherem Druck befindet als das Kondensat aus dem Kondensator 122 im Vorratsbehälter 130a. Im Gegensatz zu dem Betrieb der Einrichtung gemäss Fig. 4 sind bei den Einrichtungen gemäss Fig. 5 und 6 der kontinuierliche Wärmetransformator 200 bzw. 400 sowohl beim Austreibzyklus als auch beim Absorptionszyklus des Speichers 114 in Betrieb.

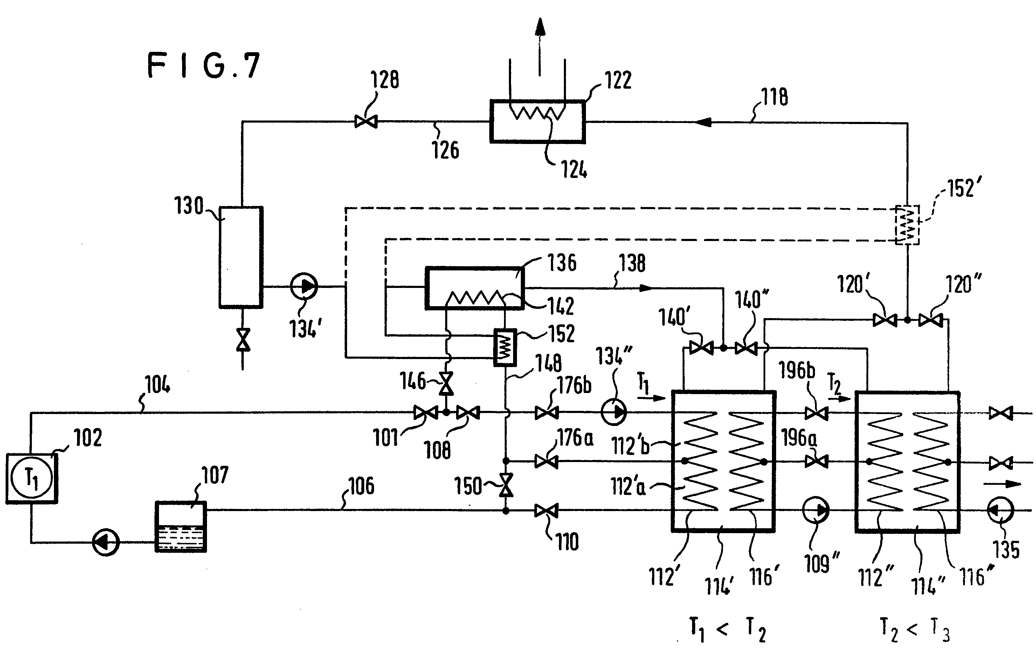

Fig. 7 zeigt eine Einrichtung, die eine Kombination eines diskontinuierlich arbeitenden Wärmetransformators mit einem vorgeschalteten, ebenfalls diskontinuierlich arbeitenden Wärmetransformator enthält, wobei der Kondensator 124 und der Verdampfer 136 beiden Wärmetransformatoren gemeinsam sind.

Die Einrichtung gemäss Fig. 7 enthält also im Prinzip zwei hintereinander geschaltete, diskontinuierlich arbeitende Wärmetransformatoren des anhand von Fig. 1 erläuterten Typs, und es wurden daher auch die gleichen Bezugszahlen wie in Fig. 1 verwendet. Wo statt einer Komponente in

Tabelle 1
(Zu Fig. 1)

| Betriebs-zustand / Kompo-nente | Ventilstellungen | | | | | | | | | Pumpen | | | Temperaturen | | | | | Drücke | | | | |
|---|---|---|---|---|---|---|---|---|---|---|---|---|---|---|---|---|---|---|---|---|---|---|
| | 108 | 110 | 120 | 128 | 140 | 146 | 150 | 158 | 162 | 109 | 134 | 164 | 102 | 114 | 122 | 130 | 136 | 112 | 114 | 122 | 130 | 136 |
| Beladen des Speichers | 0 | 0 | 0 | 0 | – | – | – | – | – | 0 | – | – | $T_1$ | $T_1$ | $T_0$ | $T_0$ | * | $P_1$ | $P_0$ | $P_0$ | $P_0$ | * |
| Entladen () bei 172 offen | – | – | – | – | 0 | 0 | 0 | 0 | 0 | 0 | 0 | 0 | $T_1$ | $T_2$ | $T_0$ | $T_0$ $(T_1)$ | $T_1$ | $P_2$ | $P_1$ | $P_0$ | $P_0$ $(P_1)$ | $P_1$ |

Beispiel 1: #
$T_0 = 5°C$ $\quad$ $P_0 = 0,01$ bar
$T_1 = 100°C$ $\quad$ $P_1 = 1$ bar
$T_2 = 200–100°C$ $\quad$ $P_2 = 20–1$ bar
für das Arbeitsstoffsystem Zeolith/$H_2O$
und $H_2O$ als Nutzwärmeträger (beide Beispiele)
0 = Ventil geöffnet bzw. Pumpe ein
– = Ventil geschlossen bzw. Pumpe aus
* = nicht in Betrieb

Beispiel 2: #
$T_0 = 45°C$ $\quad$ $P_0 = 0,1$ bar
$T_1 = 150°C$ $\quad$ $P_1 = 5$ bar
$T_2 = 270–150°C$ $\quad$ $P_2 = 70–5$ bar

$T_0 < T_1 < T_2$
$P_0 < P_1$

# (ungefähre Werte!)

Tabelle 2
(zu Fig. 6)

| Betriebszustand / Komponente | Ventilstellungen | | | | | | | Drücke | | | Temperaturen | | | | | | | | |
|---|---|---|---|---|---|---|---|---|---|---|---|---|---|---|---|---|---|---|---|
| | 120 | 128 | 140 | 611 | 613 | 615 | 619 | 114 | 122 | 216 | 114 | 122 | 130a | 130b | 214a | 214b | 222 | 236 | 102 |
| Betriebsart n=¼ Beladen | 0 | 0 | – | 0 | 0 | – | – | $P_0$ | $P_0$ | $P_2$ | $T_2$ | $T_0$ | $T_0$ | $T_2$ | $T_1$ | $T_2$ | $T_0$ | $T_1$ | $T_1$ |
| Betriebsart n=⅓ | | | | | | | | $P'_1$ | $P'_1$ | $P_2$ | $T_2$ | $T'_1$ | $T'_1$ | $T_2$ | $T'_1,T_1$ | $T_2$ | $T_0$ | $T'_1,T_1$ | $T_1$ |
| Betriebsart n=¼ Entladen | – | – | 0 | 0 | – | 0 | – | $P_2$ | * | $P_2$ | $T_4$ | * | * | $T_2$ | $T_1$ | $T_2$ | $T_0$ | $T_1$ | $T_1$ |
| Betriebsart n=⅓ | | | | | | | | $P_2$ | * | $P_2$ | $T_3$ | * | * | $T_2$ | $T_1$ | $T_2$ | $T_0$ | $T_1$ | $T_1$ |

$T_0 < T_1 < T_1 < T_3 < T_4$ ; $T'_1 \approx T_1$ ; $P'_1 \approx P_1$
$P_0 < P_1 < P_2$

Beispiel:
(ungefähre Werte

$T_0 = 20°C$
$T_1 = 65°C$
$T_2 = 100°C$
$T_3 = 150–130°C$ $\quad$ $P_0 = 0,03$ bar $\quad$ 0 = offen
$T_4 = 180–140°C$ $\quad$ $P_1 = 0,2$ bar $\quad$ – = geschlossen
$\quad$ $P_2 = 1$ bar $\quad$ * = ausser Betrieb

0 042 160

Tabelle 3a
(zu Fig. 7)

| Komponenten / Betriebszustand | Ventilstellungen | | | | | | | | | | | | | | Pumpen | | | | |
|---|---|---|---|---|---|---|---|---|---|---|---|---|---|---|---|---|---|---|---|
| | 101 | 110 | 150 | 108 | 140' | 140'' | 120' | 120'' | 128 | 146 | 176a | 176b | 196a | 196b | 109' | 109'' | 134' | 134'' | 135 |
| 1 Austreiben in 114' | 0 | 0 | – | 0 | – | – | 0 | – | 0 | – | – | 0 | – | – | 0 | – | – | OV | – |
| 2 Absorbieren in 114' | 0 | – | 0 | – | 0 | – | – | 0 | 0 | 0 | – | – | – | 0 | 0 | 0 | 0 | – | – |
| Austreiben in 114'' | 0 | – | 0 | – | – | 0 | – | – | – | 0 | – | – | – | – | 0 | – | 0 | – | 0 |
| 3 Absorbieren in 114'' (Wärmeentnahme aus 116'') | 0 | 0 | 0 | 0 | – | 0 | 0 | – | 0 | 0 | – | 0 | – | – | 0 | – | 0 | 0g | 0 |
| 3 Absorbieren in 114'' + und / 1 Austreiben in 114' | 0 | 0 | – | 0 | – | – | 0 | 0 | 0 | – | – | 0 | – | – | 0 | – | – | ov | 0 |
| 1 Austreiben in 114' | 0 | 0 | – | – | 0 | – | 0 | 0 | 0 | – | – | 0 | 0 | – | 0 | 0 | 0 | – | – |
| 2 Absorbieren in 114' (Teilabsorption) | 0 | – | 0 | 0 | 0 | – | – | 0 | 0 | 0 | – | 0 | – | – | 0 | 0 | 0 | – | 0 |
| Austreiben in 114'' | – | – | 0 | 0 | 0 | 0 | 0 | 0 | – | 0 | 0 | – | – | – | 0 | – | – | – | 0 |
| 3 Absorbieren in 114'' (Wärme für 136 aus 114' durch weitere Absorption in 114'). Entnahme von Wärme aus 114'' über 116'' | – | – | – | 0 | 0 | 0 | – | – | – | 0 | 0 | 0 | – | – | – | – | 0 | 0r | 0 |

$u = \frac{5}{4}$     $u = \frac{7}{4}$

0 = Ventil geöffnet bzw. Pumpe ein
– = Ventil geschlossen bzw. Pumpe aus
v = Pumpe Vorwärtsrichtung
r = Pumpe Rückwärtsrichtung
g = Pumpe Vorwärtsrichtung geregelt

\* nicht in Betrieb

Tabelle 3b
(zu Fig. 7)

| Komponente / Betriebszustand | Temperaturen | | | | | Drücke | | | |
|---|---|---|---|---|---|---|---|---|---|
| | 102 | 114' | 114'' | 124 | 136 | 114'' | 124 | 136 | 114' |
| **$\eta = \tfrac{1}{3}$** | | | | | | | | | |
| 1 Austreiben in 114' | $T_1$ | $T_1$ | * | $T_0$ | * | * | $P_0$ | * | $P_0$ |
| 2 Absorbieren in 114' / Austreiben in 114'' | $T_1$ | $T_2$ | $T_2$ | $T_0$ | $T_1$ | $P_0$ | $P_0$ | $P_1$ | $P_1$ |
| 3 Absorbieren in 114'' / Wärmeentnahme aus 116'' | $T_1$ | * | $T_3$ | * | $T_1$ | $P_1$ | * | $P_1$ | * |
| 3 Absorbieren in 114'' und + Austreiben in 114' 1 | $T_1$ | $T_1$ | $T_3$ | $T_0$ | $T_1$ | $P_1$ | $P_0$ | $P_1$ | $P_0$ |
| **$\eta = \tfrac{1}{4}$** | | | | | | | | | |
| 1 Austreiben in 114' | $T_1$ | $T_1$ | * | $T_0$ | * | * | $P_0$ | * | $P_0$ |
| 2 Absorbieren in 114' / Austreiben in 114'' | $T_1$ | $T_2$ | $T_2$ | $T_0$ | $T_1$ | $P_0$ | $P_0$ | $P_1$ | $P_1$ |
| 3 Absorbieren in 114'' | * | $T_2$ | $T_4$ | * | $T_2$ | $P_2$ | * | $P_2$ | $P_2$ |

$T_0 < T_1 < T_2 < T_3 < T_4$
$P_0 < P_1 < P_2$

Fig. 1 deren zwei in Fig. 7 verwendet werden müssen, sind den betreffenden Bezugszeichen ein bzw. zwei Striche angefügt. Dasselbe gilt für Komponenten, die für jeden der beiden Wärmetransformatoren benötigt werden. Mit 196a und 196b sind Ventile bezeichnet, die die anhand von Fig. 2 erläuterte abschnittsweise Be- bzw. Entladung der Speicher 114' bzw. 114'' ermöglichen.

Die Prozessbedingungen für zwei Betriebsvarianten mit unterschiedlichen Leistungsziffern $\eta = \tfrac{1}{3}$ bzw. $\tfrac{1}{4}$ und unterschiedlichen Nutzwärmeniveaus $T_3$ bzw. $T_4$ sind in Tabelle 3 aufgeführt, die aus zwei Teiltabellen 3a und 3b besteht.

Zunächst wird der Speicher 114' durch Wärme der Temperatur $T_1$ aus der Wärmequelle 102 über die Wärmetauscherschlange 112' aufgeladen. Anschliessend wird durch Verdampfen im Verdampfer 136 mittels Wärme aus der Wärmequelle 102 Arbeitsmitteldampf erzeugt, mit dem der Wärmespeicher 114' entladen wird. Die bei dem Sorbieren des Arbeitsmittels im Absorptionsmittel im Speicher 114' entstehende Wärme wird über die Wärmetauscherschlange 116' ausgekoppelt und der Wärmetauscherschlange 112'' des Speichers 114'' zugeführt, wo die Wärme zum Austreiben des Arbeitsmittels aus dem im Wärmespeicher 114'' enthaltenen Absorptionsmittels benutzt wird.

Für $\eta = \tfrac{1}{3}$ wird zur Erzeugung der Nutzwärme im Speicher 114'' der Verdampfungsprozess im Verdampfer 136 durch Wärme aus der Wärmequelle 102 bewirkt. Für $\eta = \tfrac{1}{4}$ wird die Austreibung im Speicher 114'' nur durch eine Teilmenge der im Speicher 114' erzeugten Absorptionswärme bewirkt, während die restliche Wärme aus dem Speicher 114' zur Verdampfung im Verdampfer 136 verwendet wird. Die Wärme für den Verdampfer 136 wird in diesem Falle durch einen Wärmeträgerkreislauf entnommen, der die Wärmetauscherschlange 112' und die Pumpe 134'' enthält. Um diesen Wärmeträgerkreislauf gegen die Wärmequelle 102 abzusperren, ist in der Leitung 104 ein zusätzliches Ventil 101 vorgesehen.

Da bei der Absorption im Wärmespeicher 114' ein höheres Temperaturniveau herrscht als in der Wärmequelle 102, werden der Druck im Verdampfer 136 und damit das Nutzwärmeniveau bei der Absorption im Wärmespeicher 114'' weiter erhöht, allerdings auf Kosten des Wirkungsgrades.

Als Arbeitsstoffsysteme können im Speicher 114' Silicagel/$H_2O$ und im Speicher 114'' Zeolith/$H_2O$ verwendet werden. Man kann ferner in beiden Speichern mit dem Arbeitsstoffsystem Zeolith/$H_2O$ arbeiten, wobei

a) entweder in den Speichern 114' und 114'' verschiedene Zeolithe verwendet werden, nämlich im Speicher 114' einen Zeolith, der eine relativ grosse Ausgasungsbreite in der Nähe der Wasserdampfdruckkurve aufweist und im Speicher 114'' einen Zeolith, der in einem Temperaturbereich, der von der Wasserdampfdruckkurve aus gesehen bei möglichst hohen Temperaturen liegt, eine grosse Ausgasungsbreite aufweist,

b) oder ein in den Speichern 114' und 114'' der gleiche Zeolith verwendet wird, wobei der Zeolith im Speicher 114' in einem Bereich relativ hoher $H_2O$ Beladung und der Zeolith im Speicher 114'' in einem Bereich relativ niedriger $H_2O$-Beladung betrieben wird.

Als besonders geeignet haben sich Zeolithe der Typen A, X und Y erwiesen.

**Patentansprüche**

1. Verfahren zum Speichern und Hachtransformieren der Temperatur von Wärme, bei welchem

a) in einem vorgegebenen ersten Druckbereich ein Arbeitsmittel durch Wärme eines vorgegebenen Temperaturbereichs aus einem Absorptionsmittel ausgetrieben und der beim Austreiben entstehende Arbeitsmitteldampf kondensiert wird;

b) das kondensierte Arbeitsmittel gespeichert wird;

c) der Druck des gespeicherten, kondensierten Arbeitsmittels auf einen Wert in einem zweiten Druckbereich, der höher, als der vorgegebene erste Druckbereich ist, erhöht wird,

d) das gespeicherte kondensierte Arbeitsmittel bei dem höheren Druck verdampft wird und

e) das verdampfte Arbeitsmittel in einem Druckbereich, der höher liegt als der vorgegebene Druckbereich unter Erzeugung von Absorptionswärme einer über dem vorgegebenen Temperaturbereich liegenden Temperatur im Absorptionsmittel abosrbiert wird, dadurch gekennzeichnet dass

f) als Absorptionsmittel ein Zeolith und als Arbeitsmittel Wasser verwendet werden,

g) das Austreiben in einem Temperaturbereich durchgeführt wird, der über 80 °C, vorzugsweise über 100 °C liegt, und

h) das Verdampfen des kondensierten Arbeitsmittels in einem Temperaturbereich über 80 °C durchgeführt wird.

2. Verfahren nach Anspruch 1, dadurch gekennzeichnet, dass das Verdampfen des gespeicherten kondensierten Arbeitsmittels in einem Temperaturbereich über 100 °C durchgeführt wird.

3. Einrichtung zum Durchführen des Verfahrens nach Anspruch 1, mit einem Arbeitsmittelkreislauf, in dem sich in Störmungsrichtung des Arbeitsmittels der Reihe nach

a) eine Austreiber-Absorber-Einheit (114), welche zeitlich absatzweise abwechselnd als Austreiber oder Absorber arbeitet und ein Absorptionsmittel für das Arbeitsmittel enthält, ferner

b) ein mit dieser Einheit (114) über eine Arbeitsmittel-Ausgangsleitung (118) verbundener Kondensator (122),

c) ein mit dem Ausgang des Kondensators (122) verbundenes Arbeitsmittel-Vorratsgefäss (130) für verflüssigtes Arbeitsmittel, dem eine Druckerhöhungsvorrichtung (134, 166) für das verflüssigte Arbeitsmittel zugeordnet ist, und

d) ein Verdampfer (136), dessen Eingang mit dem Arbeitsmittel-Vorratsgefäss (130) und dessen Ausgang mit der Austreiber-Absorber-Einheit (114) verbunden ist, befinden;

weiterhin mit einer Vorrichtung (112, 116) zur Entnahme von Ausgangswärme aus der Austreiber-Absorber-Einheit (114), und einer Heizvorrichtung (102, 112) mit der der Austreiber-Absorber-Einheit (114) Eingangswärme zuführbar ist, dadurch gekennzeichnet, dass die Austreiber-Absorber-Einheit (114) einen Zeolith als Absorptionsmittel enthält und mit einer Wärmequelle (102) gekoppelt ist, die Wärme mit einer Temperatur über 80 °C, vorzugsweise über 100 °C liefert, und dass der Verdampfer (136) mit einer Wärmequelle (102) gekoppelt ist, die Wärme mit einer Temperatur über 80 °C liefert.

4. Einrichtung nach Anspruch 3, dadurch gekennzeichnet, dass der Verdampfer (136) mit einer Wärmequelle (102) gekoppelt ist, die Wärme mit einer Temperatur über 100 °C liefert.

5. Einrichtung nach Anspruch 3 oder 4, dadurch gekennzeichnet, dass die Druckerhöhungsvorrichtung eine zwischen dem Arbeitsmittel-Vorratsgefäss (130) und dem Verdampfer (136) angeordnete Druckerhöhungspumpe (134) ist.

6. Einrichtung nach Anspruch 3, 4 oder 5, dadurch gekennzeichnet, dass der Ausgang des Kondensators (122) über ein Ventil (128) mit dem Eingang des Arbeitsmittel-Vorratsgefässes (130) verbunden ist und dass das Arbeitsmittel-Vorratsgefäss (130) eine Heizvorrichtung (166) enthält.

7. Einrichtung nach einem der Ansprüche 3 bis 6, dadurch gekennzeichnet, dass die Heizvorrichtung (112) für die Austreiber-Absorber-Einheit (114) aus einem Wärmetauscherelement (112) besteht, das mit einer Wärmequelle (102) in einen Wärmeträgerkreislauf (104, 106) geschaltet ist, und dass der Wärmeträgerkreislauf über eine absperrbare Verbindung (144, 146, 148, 150) mit einem Wärmetauscherelement (142) im Verdampfer (136) verbunden ist.

8. Einrichtung nach einem der Ansprüche 3 bis 6, dadurch gekennzeichnet, dass die Heizvorrichtung (112) für die Austreiber-Absorber-Einheit (114) ein Wärmetauscherelement ist, das mit einer Wärmequelle (102) in einen Wärmeträgerkreislauf geschaltet ist, und dass das Wärmetauscherelement (112) durch eine Ventilanordnung (108, 110, 158, 162) von der Wärmequelle (102) abtrennbar und in einen Wärmeträgerkreislauf (156, 160) zur Entnahme von Nutzwärme aus der Austreiber-Absorber-Einheit einschaltbar ist.

9. Einrichtung nach einem der Ansprüche 3 bis 8, dadurch gekennzeichnet, dass in die Verbindung zwischen dem Arbeitsmittel-Vorratsgefäss (130) und dem Eingang des Verdampfers (136) ein Kanal eines Wärmetauschers (152) geschaltet ist, dessen anderer Kanal in eine Rücklaufleitung (148) von einem Wärmetauscherelement (142) des Verdampfers (136) geschaltet ist.

10. Einrichtung nach einem der Ansprüche 3 bis 9, gekennzeichnet durch eine Vorrichtung (112a, 112b, 112c, 176a, 176b, 176c) zum abschnittsweisen Einspeichern bzw. Entnehmen von Wärme in die bzw. aus der Austreiber-Absorber-Einheit (114, Fig. 2).

11. Einrichtung nach einem der Ansprüche 3 bis 10, dadurch gekennzeichnet, dass das Wärmetauscherelement (142) des Verdampfers (136) mit der Wärmequelle (102) über eine Kompressor-Wärmepumpe (180) gekoppelt ist, die die Temperatur der von der Wärmequelle (102) gelieferte Wärme erhöht und die Wärme erhöhter Temperatur dem Verdampfer (136) zuführt.

12. Einrichtung nach einem der Ansprüche 3 bis 11, dadurch gekennzeichnet, dass der Wärmequelle (102) eine Kompressorwärmepumpe nachgeschaltet ist.

13. Einrichtung nach einem der Ansprüche 3 bis 11, dadurch gekennzeichnet, dass die Wärmequelle über einen kontinuierlich arbeitenden Wärmetransformator (200) mit der Heizvorrichtung (112) der Austreiber-Absorber-Einheit gekoppelt ist.

14. Einrichtung nach einem der Ansprüche 3 bis 13, dadurch gekennzeichnet, dass der Verdampfer (136) und die Heizvorrichtung (112) über einen kontinuierlich arbeitenden Wärmetransformator (200) mit der Wärmequelle verbunden ist (Fig. 5).

15. Einrichtung nach Anspruch 14, dadurch gekennzeichnet, dass der mit dem Arbeitsmittel-Vorratsgefäss (130b) gekoppelte Verdampfer mit einem Absorber des kontinuierlich arbeitenden Wärmetransformators (400) eine Einheit (216) bildet (Fig. 6).

16. Einrichtung nach einem der Ansprüche 3 bis 12, dadurch gekennzeichnet, dass die Heizvorrichtung (112'') über einen diskontinuierlich arbeitenden Wärmetransformator mit der Wärmequelle (102) verbunden ist (Fig. 7).

17. Einrichtung nach einem der vorhergehenden Ansprüche, dadurch gekennzeichnet, dass zwischen den Ausgang des Verdampfers (136) und den Arbeitsmitteleingang der zugehörigen Austreiber-Absorber-Einheit (114) ein Kompressor (154) geschaltet ist.

18. Einrichtung nach einem der Ansprüche 3 bis 17, dadurch gekennzeichnet, dass der zur Entnahme von Ausgangswärme dienenden Vorrichtung (116) ein Wärmetauscherelement (294) eines Wärmetauschers (292) vorgeschaltet ist, der an einen Wärmeträgerkreislauf der Heizvorrichtung (112) des Speichers (114) angeschlossen ist.


## Claims

1. Method of storing ans bringing heat to a higher temperature in which

(a) a working medium is driven off from an absorption medium in a predetermined first pressure range by heat of a predetermined temperature range and the driven off working medium vapour is condensed;

(b) the condensed working medium is stored;

(c) the pressure of the stored, condensed working medium is increased to a value in a second pressure range which is higher than the predetermined first pressure range,

(d) the stored, condensed working medium is vaporised at the higher pressure and

(e) the vaporised working medium is absorbed in the absorption medium in a pressure range which is higher than the predetermined pressure range whilst producing heat of absorption of a temperature above the predetermined temperature range, characterised in that

(f) a zeolite is used as the absorption medium and water as the working medium,

(g) the driving out is preformed in a temperature range which is above 80°C, preferably above 100°C, and

(h) the vaporisation of the condensed working medium is performed in a temperature range above 80°C.

2. Method as claimed in claim 1, characterised in that the vaporisation of the stored, condensed working medium is performed in a temperature range above 100°C.

3. Device for carrying out the method as claimed in claim 1, having a working medium circuit in which there are in order in the flow direction of the working medium

(a) a driving out-absorber unit (114) which operates intermittently alternately as a driver-out or absorber and contains an absorption medium for the working medium, further

(b) a condenser (122) connected to this unit (114) via a working medium outlet line (118)

(c) a working medium storage vessel (130) connected to the outlet of the condenser (122) for liquefied working medium which is associated with a pressure increasing apparatus (134, 166) for the liquefied working medium, and

(d) a vaporiser (136) whose inlet is connected to the working medium storage vessel (130) and whose outlet is connected to the driver out-absorber unit (114); further having an apparatus (112, 116) for removing output heat from the driver out-absorber unit (114), and a heating apparatus (102, 112) with which input heat may be fed to the driver out-absorber unit (114), characterised in that the driver out-absorber unit (114) contains a zeolite as the absorption medium and is coupled to a heat source (102) which delivers heat with a temperature above 80°C, preferably above 100°C, and that the vaporiser (136) is coupled to a heat source (102) which delivers heat with a temperature above 80°C.

4. Device as claimed in claim 3, characterised in that the vaporiser (136) is coupled to a heat source (102) which delivers heat with a temperature above 100°C.

5. Device as claimed in claim 3 or 4, characterised in that the pressure increasing apparatus is a pressure increasing pump (134) arranged between the working medium storage vessel (130) and the vaporiser (136).

6. Device as claimed in claim 3, 4 or 5, characterised in that the outlet of the condenser (122) is connected to the inlet of the working medium storage vessel (130) via a valve (128) and that the working medium storage vessel (130) contains a heating apparatus (166).

7. Device as claimed in one of claims 3 to 6, characterised in that the heating apparatus (112) for the driver out-absorber unit (114) comprises a heat exchanger element (112) which is connected with a heat source (102) in a heat carrier circuit (104, 106) and that the heat carrier circuit is connected via a connection (144, 146, 148, 150) which can be closed to a heat exchanger element (142) in the vaporiser (136).

8. Device as claimed in one of claims 3 to 6, characterised in that the heating apparatus (112) for the driver out-absorber unit (114) is a heat exchanger element that is connected with a heat source (102) in a heat carrier circuit and that the heat exchanger element (112) may be cut off from the heat source (102) by a valve arrangement (108, 110, 158, 162) and may be connected in a heat carrier circuit (156, 160) for removing useful heat from the driver out-absorber unit.

9. Device as claimed in one of claims 3 to 8, characterised in that in the connection between the working medium storage vessel (130) and the inlet of the vaporiser (136) a passage of a heat exchanger (152) is connected, the other passage of which is connected in a return line (148) of a heat exchanger element (142) of the vaporiser (136).

10. Device as claimed in one of claims 3 to 9, characterised by an apparatus (112a, 112b, 112c, 176a, 176b, 176c) for storing or removing heat in stages into and out of the driver out-absorber unit (114, Fig. 2), respectively.

11. Device as claimed in one of claims 3 to 10, characterised in that the heat exchanger element (142) of the vaporiser (136) is coupled to the heat source (102) via a compressor-heat pump (180) which increases the temperature of the heat delivered by the heat source (102) and feeds the heat of increased temperature to the vaporiser (136).

12. Device as claimed in one of claims 3 to 11, characterised in that a compressor-heat pump is connected downstream of the heat source (102).

13. Device as claimed in one of claims 3 to 11, characterised in that the heat source is coupled via a continuously operating heat transformer (200) to the heating apparatus (112) of the driver out-absorber unit.

14. Device as claimed in one of claims 3 to 13, characterised in that the vaporiser (136) and the heating apparatus (112) is connected via a continuously operating heat transformer (200) to the heat source (Fig. 5).

15. Device as claimed in claim 14, characterised in that the vaporiser coupled to the working medium storage vessel (130b) forms a unit (216) with an absorber of the continuously operating heat transformer (400) (Fig. 6).

16. Device as claimed in one of claims 3 to 12, characterised in that the heating apparatus (112″) is connected to the heat source (102) via a discontinuously operating heat transformer (Fig. 7).

17. Device as claimed in one of the preceding claims, characterised in that a compressor (154) is connected between the outlet of the vaporiser (136) and the working medium inlet of the associated driver out-absorber unit (114).

18. Device as claimed in any one of claims 3 to 17, characterised in that connected upstream of the apparatus (116) serving to remove output heat is a heat exchanger element (294) of a heat exchanger (292) which is connected to a heat carrier circuit of the heating apparatus (112) of the store (114).

**Revendications**

1. Procédé d'accumulation et de transformation de la température de chaleur dans lequel

a) dans un premier domaine de pression donné à l'avance un milieu de travail est, sous l'action de la chaleur d'un domaine de température donné à l'avance, expulsé d'un milieu d'absorption, la vapeur de milieu de travail formée lors de l'expulsion étant condensée;

b) le milieu de travail condensé est accumulé;

c) la pression du milieu de travail condensé et accumulé est augmentée jusqu'à une valeur d'un deuxième domaine de pression qui est plus élevé que le premier domaine de pression donné à l'avance,

d) le milieu de travail condensé et accumulé est vaporisé à la pression plus élevée et

e) le milieu de travail vaporisé est absorbé dans un domaine de pression qui est plus élevé que le domaine de pression donné à l'avance, avec production de chaleur d'absorption d'une température supérieure au domaine de température donné à l'avance, dans le milieu d'absorption, caractérisé en ce que

f) on utilise comme milieu d'absorption, un zéolithe et, comme milieu de travail, de l'eau

g) l'expulsion s'effectue dans un domaine de température qui est au-dessus de 80 °C et de préférence au-dessus de 100 °C, et

h) la vaporisation du milieu de travail condensé s'effectue dans un domaine de température situé au-dessus de 80 °C.

2. Procédé suivant la revendication 1 caractérisé en ce que la vaporisation du milieu de travail condensé et accumulé s'effectue dans un domaine de température situé au-dessus de 100 °C.

3. Dispositif pour l'application du procédé selon la revendication 1, comportant un circuit de milieu de travail dans lequel sont disposés dans l'ordre, dans le sens de l'écoulement du milieu de travail,

a) une unité d'expulsion et d'absorption milieu (114) qui fonctionne alternativement comme dispositif d'expulsion ou comme dispositif d'absorption et contient un milieu d'absorption pour le milieu de travail,

b) un condenseur (122) relié à cette unité (114) par l'intermédiaire d'une canalisation de sortie du milieu de travail (118),

c) un réservoir de milieu de travail (130) pour le milieu de travail liquéfié, qui est relié à la sortie du condenseur (122) et auquel est associé un dispositif d'augmentation de la pression (134, 166) pour le milieu de travail liquéfié,

d) un évaporateur (136) dont l'entrée est reliée au réservoir de milieu de travail (130) et dont la sortie est reliée à l'unité d'expulsion et d'absorption (114), et comportant également un dispositif (112, 116) qui capte la chaleur dégagée dans l'unité d'expulsion et d'absorption (114) et un dispositif de chauffage (102, 112) qui peut apporter de la chaleur d'entrée à l'unité d'expulsion et d'absorption (114), caractérisé en ce que l'unité d'expulsion et d'absorption (114) contient, comme milieu d'absorption, un zéolithe et est accouplée à une source de chaleur (102), qui fournit de la chaleur à une température supérieure à 80 °C, de préférence supérieure à 100 °C et en ce que l'évaporateur (136) est accouplé à une source de chaleur (102) qui fournit de la chaleur à une température supérieure à 80 °C.

4. Dispositif suivant la revendication 3 caractérisé en ce que l'évaporateur (136) est accouplé à une source de chaleur (102) qui fournit de la chaleur à une température supérieure à 100 °C.

5. Dispositif suivant l'une quelconque des revendications 3 ou 4 caractérisé en ce que le dispositif d'augmentation de la pression est une pompe d'augmentation de la pression (134) intercalée entre le réservoir de milieu de travail (130) et l'évaporateur (136).

6. Dispositif suivant l'une quelconque des revendications 3, 4 ou 5 caractérisé en ce que la sortie du condenseur (122) est reliée, par l'intermédiaire d'une soupape (128), à l'entrée du réservoir de milieu de travail (130) et en ce que le réservoir de milieu de travail (130) contient un dispositif de chauffage (166).

7. Dispositif suivant l'une quelconque des revendications 3 à 6 caractérisé en ce que le dispositif de chauffage (122) pour l'unité d'expulsion et d'absorption (114) est constitué par un élément échangeur de chaleur (112) qui est en communication avec une source de chaleur (102) dans un circuit de fluide caloporteur (104, 106) et en ce que le circuit de fluide caloporteur est relié, par l'intermédiaire d'une liaison pouvant être fermée (144, 146, 148, 150), à un élément échangeur de chaleur (142) dans l'évaporateur (136).

8. Dispositif suivant l'une quelconque des revendications 3 à 6 caractérisé en ce que le dispositif de chauffage (112) de l'unité d'expulsion et d'absorption (114) est un élément échangeur de chaleur qui est mis en communication avec une source de chaleur (102) dans un circuit de fluide caloporteur, et en ce que l'élément échangeur de chaleur (112) peut être séparé, par un dispositif à soupape (108, 110, 158, 162), de la source de chaleur (102) et peut être mis en communication avec un circuit de fluide caloporteur (156, 160) pour capter la chaleur utile à partir de l'unité d'expulsion et d'absorption.

9. Dispositif suivant l'une quelconque des revendications 3 à 8 caractérisé en ce que la canalisation de la liaison entre le réservoir de milieu de travail (130) et l'entrée de l'évaporateur (136) est mis en communication avec un conduit d'un échangeur de chaleur (152) dont l'autre conduit est mis en communication avec une canalisation de retour (148) partant d'un élément échangeur de chaleur (142) de l'évaporateur (136).

10. Dispositif suivant l'une quelconque des revendications 3 à 9 caractérisé en ce qu'il comprend un dispositif (112a, 112b, 112c, 176a, 176b, 176c) assurant l'accumulation par secteurs de la chaleur dans l'unité d'expulsion et d'absorption (114 figure 2) ou la cession de la chaleur par secteurs à partir de cette unité.

11. Dispositif suivant l'une quelconque des revendications 3 à 10 caractérisé en ce que l'élément échangeur de chaleur (142) de l'évaporateur (136) est accouplé à la source de chaleur (102) par l'intermédiaire d'une pompe à chaleur à compresseur (180) qui élève la température de la chaleur fournie par la source de chaleur (102) et apporte à l'évaporateur (130) la chaleur à plus haute température.

12. Dispositif suivant l'une quelconque des revendications 3 à 11 caractérisé en ce que la source de chaleur (102) est suivie d'une pompe à chaleur à compression.

13. Dispositif suivant l'une quelconque des revendications 3 à 11 caractérisé en ce que la source de chaleur est accouplée, par l'intermédiaire d'un transformateur de chaleur (200) fonctionnant d'une manière continue, au dispositif de chauffage (112) de l'unité d'expulsion et d'absorption.

14. Dispositif suivant l'une quelconque des revendications 3 à 13 caractérisé en ce que l'évaporateur (136) et le dispositif de chauffage (112) sont reliés à la source de chaleur par l'intermédiaire d'un transformateur de chaleur (200) fonctionnant d'une manière continue (figure 5).

15. Dispositif suivant la revendication 14 caractérisé en ce que l'évaporateur accouplé au réservoir de milieu de travail (130b) forme une unité (216) avec un dispositif d'absorption du transformateur de chaleur fonctionnant d'une manière continue (figure 6).

16. Dispositif suivant l'une quelconque des revendications 3 à 12 caractérisé en ce que le dispositif de chauffage (112") est relié à la source de chaleur (102) par l'intermédiaire d'un transformateur de chaleur fonctionnant d'une manière discontinue (figure 7).

17. Dispositif suivant l'une quelconque des revendications précédentes caractérisé en ce qu'un compresseur (154) est intercalé entre la sortie de l'évaporateur (136) et l'entrée de milieu de travail de l'unité d'expulsion et d'absorption correspondante.

18. Dispositif suivant l'une quelconque des revendications 3 à 17 caractérisé en ce que le dispositif (116) servant à capter la chaleur de sortie est monté avant un élément échangeur de chaleur (294) d'un échangeur de chaleur (292) qui est relié à un circuit de fluide caloporteur du dispositif de chauffage (112) de l'accumulateur (114).

F I G . 1

# F I G . 2

FIG.3

0 042 160

FIG.4

$T_0 < T_1 < T_2 < T_3$
$\eta \approx 1/3$

F I G . 5

$T_0 < T_1 < T_2 < T_3$
$\eta \approx 1/4$

FIG.6

FIG.7

$T_2 < T_3$

$T_1 < T_2$